# EUROPEAN PATENT APPLICATION

(11) **EP 4 643 987 A1**
(43) Date of publication of application: **05.11.2025**
(21) Application number: 22969738.8
(22) Date of filing: 30.12.2022
(51) Int. Cl.: B01J 19/18, C08G 18/10, B01J 19/00

(54) **SPANDEX DRY-SPINNING STOCK SOLUTION CONTINUOUS REACTOR AND REACTION METHOD**

(71) Applicant: Zhengzhou Zhongyuan Spandex Engineering Technology Co., Ltd, Zhengzhou, Henan 450001 (CN)
(72) Inventor: CUI, Yuewei, Zhengzhou, Henan 450001 (CN); LI, Yong, Zhengzhou, Henan 450001 (CN); MA, Liwei, Zhengzhou, Henan 450001 (CN)
(74) Representative: Keltie LLP
(86) International application number: PCT/CN2022/143702
(87) International publication number: WO 2024/138591

(57) **Abstract**

A continuous reactor for the spinning dope of dry-spun spandex and a reaction method, the reactor comprises a housing (1) and a rotor (2), the housing (1) being provided with a prepolymer feed inlet (3), a mixed amine feed inlet (4) and a polymer outlet (5). The rotor comprises a main shaft section (21) and a mixing section (22). The diameter of the mixing section (22) gradually decreases from the side next to the prepolymer feed inlet (3) to the side next to the polymer outlet (5), and the gap between the side of the mixing section (22) next to the prepolymer feed inlet (3) and the housing (1) is less than 5 mm. The mixing section (22) is sequentially provided with at least a first blade group (23) and a second blade group (24) in the direction in which its diameter decreases, and the gap between the end of the first blade group (23) furthest from the axis of the rotor (2) and the housing (1) is less than 5 mm. A reaction method which comprises: a liquid film formed from a prepolymer, the mixed amine liquid and liquid film coming into contact, an initial reaction occurring within the small units formed during mixing, the chain-extension reaction and the chain-termination reaction being completed as they are thoroughly stirred by each blade stage, the polymer obtained leaving the reactor.

## Description

### Technical Field

The present invention relates to the field of elastic fiber production equipment, and specifically relates to the technical field of spandex prepolymer and mixed amine solution reaction continuous chain-extension reactors and reaction methods.

### Background technique

In the dry-spun spandex production process, the preparation of the spinning dope mainly comprises two reaction processes. The first reaction is the process of producing the prepolymer, and the second reaction is the process of producing the polyurethane polymer. Whereby, in the second reaction process, the reaction reagents generally include: 1. The prepolymer obtained from the first reaction; 2. A mixed amine solution including one or more aliphatic monoamine terminators and one or more aliphatic diamine chain extenders.

The reaction process between the prepolymer and the mixed amine solution usually relies on a batch or continuous reactor. As the reaction between the prepolymer and the mixed amine occurs very quickly in the reactor, and the molecular weight of the product is very high, the viscosity of the liquid in the reactor can generally increase from 20 poise to 1,200 to 1,400 poise within a few seconds. In addition, certain by-products are also generated during the reaction process, these by-products generally being referred to as "hard-segment gels". Technically speaking, these are not typical "gels", but are partially comprised of low-solubility polymers obtained from side reactions. Compared with the intended polyurethane polymer, they have abnormally long urea-based hard segments and abnormally short polyurethane soft segments, as well as small amounts of MDI molecule cyclic oligomers and ethylenediamine. These by-products are mainly formed when the prepolymer solution comes into contact with the mixed amine solution flow. At the interface, many different polymer entities are quickly formed, and the most difficult of these polymer entities to dissolve will precipitate and adhere to metal surfaces with which they come into contact. These deposits are swollen by the solvent to form the so-called "hard-segment gels".

With existing continuous polymerization reactors, such as the traditional spandex continuous reactor disclosed by CN102408532A, the mixed amine solution and the prepolymer solution are metered into the reaction chamber through a single through-shaft inlet, whereby the mixed amine solution enters through the central tube, and the prepolymer solution flows in together around the periphery of the central tube. As a result of this, a large amount of prepolymer solution comes into contact with the mixed amine solution at the coaxial inlet, and localized proportioning errors at the contact interface easily result in the formation of "hard-segment gels".

Furthermore, traditional reactors are both large in size, bulky and cumbersome, while the polymers produced by the reaction have a high molecular weight and high viscosity. When the heavy-duty rotors rotate to stir the high-viscosity polymers, very high mechanical shear heat generation occurs, making it impossible for high rotation speeds to be achieved. Usually, the maximum rotation speed achieved does not exceed 250 rpm, and the mixing effect is poor. When the prepolymer solution comes into contact with the mixed amine solution, the localized proportions may deviate from the theoretical values, causing the molecular weight and viscosity of the reaction product to deviate from the preset values, further increasing the content of such by-products as "hard-segment gels".

Accumulations of these by-products in the reactor require the reactor to be shut down for cleaning. Moreover, between each cleaning, the accumulation of by-products will also lead to changes in the performance of the reactor. In certain types of reactor, a manually operated mechanical cleaning device or scraper is provided at the reagent inlet, its position allowing periodic removal of hard-segment polymer gels from around the inlet while the reactor continues to operate. However, since the scraper occupies a large part of the cross-sectional area of the peripheral flow channel of the coaxial inlet during operation, backpressure disturbances and interruptions in the flow of the prepolymer solution can occur.

### Contents of the invention

In order to resolve the above technical problems, the present invention provides a continuous reactor for the spinning dope of dry-spun spandex capable of achieving a polymerization reaction with precise proportioning of the prepolymer solution and mixed amine solution, avoiding the effects of by-products on equipment and production, in addition to reducing the mechanical heat generated at high rotation speeds. The specific scheme being as follows:
A continuous reactor for the spinning dope of dry-spun spandex which comprises a housing and a rotor. The housing being provided with a prepolymer feed inlet, a mixed amine feed inlet and a polymer outlet, wherein the housing comprises a circumferential surface and at least one end surface. The rotor comprises a main shaft section and a mixing section. The main shaft section passes through the housing and is connected to a driving device. The mixing section is the part of the rotor inside the reactor cavity. The diameter of the mixing section gradually decreases from the side next to the prepolymer feed inlet to the side next to the polymer outlet, and the gap between the bottom surface of the mixing section and the end of the housing is less than 5 mm. The mixing section is sequentially provided with at least a first blade group and a second blade group in the direction in which its diameter decreases.

Whereby, the mixing section of the rotor can be roughly conceived of as a "cone". Where "cone" is referred to, this means that the overall shape of the mixing section is roughly conical or a frustum-shape similar to a cone, that is, the mixing section has conical sides and two end surfaces. Specifically, in the direction of the decrease of its diameter, the geometric shape of the conical sides of the mixing section can be a standard conical shape, that is, the lateral edge of the mixing section is a straight line; the conical side surfaces can also be a smoothly curving surface, that is, the lateral edge of the mixing section is a curve; the conical side surfaces can also be stepped, that is, the lateral edge of the mixing section is a polyline. Generally speaking, the diameter of the mixing section gradually decreases from the side next to the prepolymer feed inlet to the side next to the polymer outlet. In addition, in the present invention, unless otherwise specified, the end surface of the mixing section with the larger diameter is referred to as the "bottom surface", and the section of the mixing section close to its bottom surface is referred to as its "bottom section". Similarly, the end surface of the mixing section with a smaller diameter is referred to as its "top surface", and the section of the mixing section next to its end surface is referred to as its "top section". The "cavity" of the reactor is the space enclosed by the housing and is for the purpose of accommodating the internal components of the reactor and the reaction liquid. The housing can comprise two end surfaces and a circumferential surface. Optionally, the rotation radius of each blade group gradually decreases in a direction towards the discharge port.

Optionally, the gap between the ends of the first blade group furthest from the axis of the rotor and the circumferential surface of the housing is less than 5 mm.

Optionally, the prepolymer feed inlet is opposite the bottom surface of the mixing section.

In another optional embodiment, the prepolymer feed inlet can also be located on the circumferential surface of the housing. When this is the case, the prepolymer feed inlet should be positioned on the side of the mixed amine feed inlet next to the bottom surface of the mixing section, so that a liquid film of prepolymer solution can form between the mixing section of the rotor and the housing. In addition, the prepolymer and the mixed amine solution can also be fed coaxially. In schemes of the present invention, without changing other characteristics, when the feed method adopted is coaxial delivery, the effectiveness of the reaction achieved with this reactor still exceeds that of traditional reactors, but in view of the prepolymer not forming a film in advance, gels can still form at the inlet, and the reaction is less effective than the preferred feed methods of the present invention.

Optionally, the mixed amine feed inlet is provided on the circumferential surface of the housing.

Optionally, the prepolymer feed inlet is multiple feed inlets circumferentially distributed on the end surface of the housing.

Optionally, the mixed amine feed inlet is opposite the first blade group.

Optionally, the mixed amine feed inlet is located between the prepolymer feed inlet and the first blade group.

Optionally, the side of the first blade group next to the prepolymer feed inlet partially overlaps the mixed amine feed inlet when projected radially onto the reactor.

The various optional methods above are all to ensure that the mixture of the prepolymer solution and the mixed amine solution is divided and dispersed immediately after it comes into contact the first blade group, so as to achieve the purpose of precise proportioning of the prepolymer and the mixed amine. Since the mixed amine feed inlet is close enough to the first blade group, and the gap between the mixing section and the circumferential surface of the housing at this location is small and the linear velocity of the liquid flow is fast, the first blade group can disperse the mixed solution rapidly, avoiding localized proportioning errors.

Optionally, the diameter of the mixed amine feed inlet is smaller than the width of a single blade in the first blade group.

Optionally, the distance between the first blade group and the bottom surface of the mixing section is greater than 5 mm.

Optionally, the housing is provided with a heat-insulating interlayer.

Optionally, stator groups are provided in the reactor cavity, the stator groups being provided between each blade group.

Optionally, the number of stators in each stator group is 4 - 16.

Optionally, the minimum gap between stators and adjacent blades is less than 5 mm.

The "minimum gap" refers to the minimum distance between the stators and the rotating surfaces of the blades.

Optionally, the minimum gap between the stator and the mixing section is less than 5 mm.

The minimum gap between the stator and the mixing section refers to the minimum distance between the end of the stator next to the mixing section and the side surface of the mixing section.

Optionally, the shape of the stator is plate-shaped.

Optionally, the plate-shaped stator is not perpendicular to the axis of the rotor.

Optionally, the diameter of the cavity gradually decreases from the prepolymer inlet towards the polymer outlet.

Optionally, the mixing section is further provided with a third blade group in the direction in which its diameter decreases.

Optionally, the number of blades in each blade group decreases sequentially.

Optionally, the number of blades in the first blade group is 4-50, the number of blades in the second blade group is 2-36, and the number of blades in the third blade group is 0-18.

Optionally, the mixed amine feed inlet is provided with a self-cleaning device.

Optionally, there are two mixed amine feed inlets provided.

Optionally, the self-cleaning device includes a cleaning device housing, a liquid inlet pipe, a perforated pipe and a cleaning rod. The perforated pipe is provided with multiple openings. The cleaning rod extends from the outside of the cleaning device housing into the perforated pipe, and a handle is provided on the cleaning rod outside the cleaning device housing.

A polyurethane chain extension reaction method using the above mentioned reactor, wherein this comprises the following steps:
1) The prepolymer enters the reactor cavity through the prepolymer feed inlet, and a liquid film with a thickness of less than 5 mm is formed due to the effect of the housing and the bottom surface of the mixing section;
2) During the process of the liquid film advancing, the mixed amine solution is ejected from the mixed amine feed inlet and meets the liquid film;
3) At the same time as the liquid film meets the mixed amine solution, the first blade group divides the mixture of the prepolymer and the mixed amine solution into multiple small units, an initial reaction taking place simultaneously within the small units;
4) The prepolymer and the mixed amine solution continue to advance due to the pushing of the metering pump and the blades. As the advancing process takes place, thorough stirring by the blades at all stages occurs, and the chain-extension reaction and chain-termination reaction take place to obtain the polymer, whereby the rotation speed of the blades is 300-3000 rpm;
5) The polymer exits the reactor after undergoing reaction by being pushed through the polymer outlet by the metering pump and the blades.

### Beneficial Effects

The present invention provides a continuous reactor for the spinning dope of dry-spun spandex. Compared with the traditional reactor, the mixing section of the rotor in the reactor cavity of the present invention is conical, and the gap between the side of the mixing section next to the prepolymer feed inlet and the housing is limited so that after the prepolymer enters the reactor cavity, a prepolymer liquid film is uniformly formed between the housing and the rotor, enabling it to be more accurately proportioned with the mixed amine solution.

By defining the gap between the first blade group and the housing, and the relationship between the relative positions of the mixed amine feed inlet and the first blade group, as the liquid film advances to the first row of blades installed on the cone, it is divided into several small units by the blades and driven to rotate rapidly, then as it encounters the mixed amine solution entering from the mixed amine feed inlet, the reaction between the prepolymer and the mixed amine solution is constrained to within each small unit. The proportioning of reactants in each unit is more accurate, avoiding localized proportioning imbalances within the reactor resulting in gel polymers generated by localized proportioning imbalance in the reactor cavity affecting subsequent reactions.

Due to the conical mixing section, the number of rotor blades, the rotation radius and the linear velocity of each blade group decreases gradually, reducing the mechanical heat generation caused by stirring the viscous polymer. This allows a reduction in the size of the equipment and an increase in the rotation speed.

### Description of Drawings

1. Housing 11. First end surface of the housing 12. Second end surface of the housing 13. Circumferential surface of the housing 14. First stator group 15. Second stator group 16. Heat-insulating interlayer 17. Heat-insulating liquid inlet 18. Heat-insulating liquid outlet 2. Rotor 21. Main shaft section 22. Mixing section 23. First blade group 24. Second blade group 25. Third blade group 3. Prepolymer feed inlet 4. Mixed amine feed inlet 41. Self-cleaning device 42. Cleaning device housing 43. Mixed amine liquid inlet pipe 44. Perforated pipe 45. Cleaning rod 46. Handle 5. Polymer outlet 6. Driving device

### Specific Embodiments

To make the objectives, technical solutions and advantages of the embodiments of the present invention clearer, the technical solutions in the embodiments of the present invention will be described more clearly and completely below in conjunction with the accompanying drawings. Clearly, the described embodiments are only some of the embodiments of the present invention, rather than all of them. For the sake of clarity and conciseness, not all features of the actual implementation are described in the specification. To avoid lack of clarity about the present invention due to unnecessary details, only the device structures and processing steps closely related to the schemes of the present invention are described in the accompanying drawings and the description, while indications and descriptions of components and processes which have little relevance to the present invention and with which a person skilled in the art would be familiar are omitted.

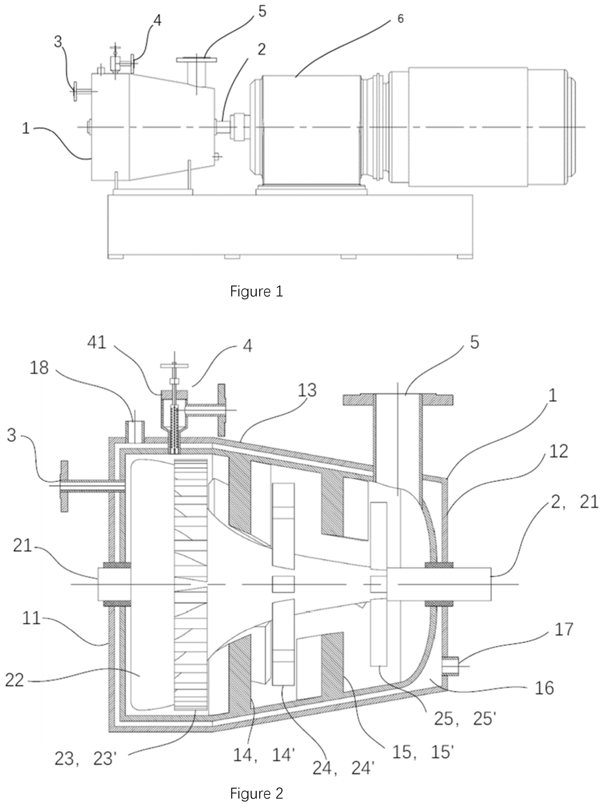

For the convenience of description, unless otherwise specified in the following text, when "upper", "lower", "left" and "right" are referred to, this is in terms of relative positions in Figure 1. Prepolymer refers to a prepolymer solution obtained by the prepolymerization reaction of a diol compound and a diisocyanate compound; the mixed amine solution refers to substances such as small molecule diols, small molecule diamines, or a mixture of small molecule diamines and monoamines that undergo chain extension and chain termination reactions with the prepolymer in the production of spandex. "Mixed amine" is a general term used for convenience in the description, and is used to refer to a mixed solution of the chain extender and the chain terminator in polyurethane polymerization, and can in fact also include alcohol-based chain extenders and the chain terminators; polymer refers to the high molecular weight polyurethane compound obtained by the reaction of the prepolymer and the mixed amine solution. Gels refers to the high-viscosity by-product substances generated due to localized prepolymer and mixed amine solution proportioning errors or high-viscosity by-products produced as a result of excessively high molecular weight reaction products resulting from excessively rapid reactions due to heat being generated mechanically, and include the aforementioned "hard-segment gels". The presence of gels can affect the operation of the equipment and the progression of subsequent reactions.

### Embodiment 1

This embodiment relates to a continuous reactor for the spinning dope of dry-spun spandex. As shown in Figures 1-2, the reactor includes a housing 1, and a rotor 2. The housing is provided with a prepolymer feed inlet 3, a mixed amine feed inlet 4, a polymer outlet 5, and a driving device 6. As shown in Figure 2, the housing 1 comprises a first housing end surface 11, a second housing end surface 12 and a circumferential housing surface 13. The prepolymer feed inlet 3 is provided on the first end surface 11 of the housing, and the mixed amine feed inlet 4 is provided on the circumferential surface 13 of the housing. Wherein, the diameter of the prepolymer feed inlet 3 is ϕ50 mm, the inner diameter of the mixed amine feed inlet 4 being ϕ15 mm; the inner diameter of the polymer outlet 5 is ϕ200 mm, and the inner diameter of the first housing end surface 11 is ϕ480 mm; the inner diameter of the second housing end surface 12 is ϕ360 mm, and the length of the inner cavity of the housing 1 is 560 mm. A cavity is formed within the housing 1, and its free volume is approximately 45 liters. The inner diameter of the cavity gradually decreases from left to right. The prepolymer solution continuously enters the cavity through the prepolymer feed inlet 3 at a flow rate of 1700 kg/hr and the mixed amine solution continuously enters the cavity through the mixed amine feed inlet 4 at a flow rate of 1100 kg/hr respectively. After the polymer is formed by the reaction in the cavity, it exits the reactor through the polymer outlet 5 and enters the downstream equipment.

In an optional embodiment, the prepolymer feed inlet 3 can also be multiple inlets evenly distributed along the circumference on the first end surface 11 of the housing. Preferably, the number of the inlets is 4, and the inner diameter of each inlet is ϕ25 mm. The 4 feed inlets can be connected to a one-in four-out distribution valve via pipes.

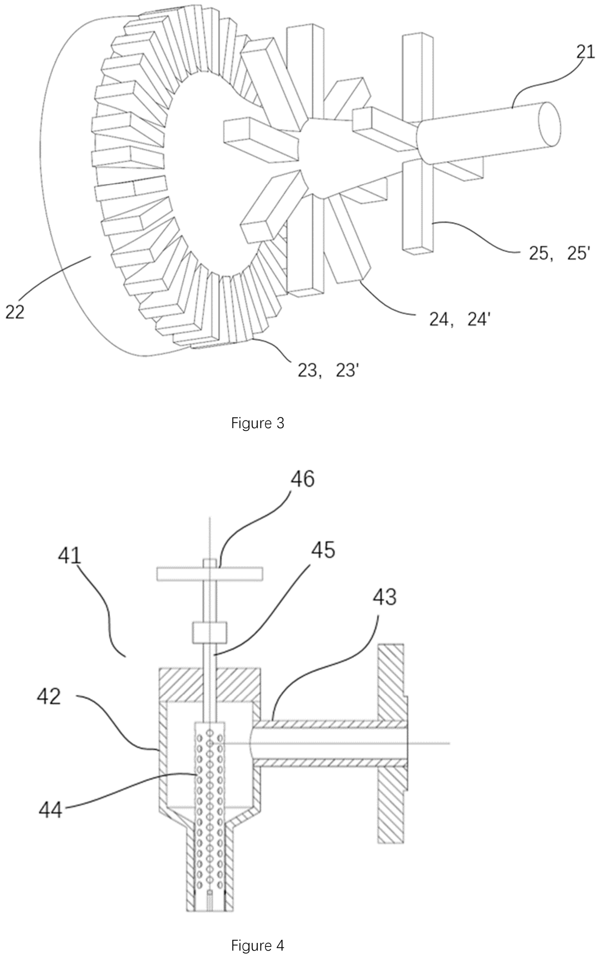

As shown in Figures 2 and 3, the rotor 2 includes a main shaft section 21 and a mixing section 22. The main shaft section 21 passes through the housing 1 from left to right and is connected to the driving device 6. In this embodiment, the driving device 6 is composed of components such as a motor, a coupling, and a bearing. In this embodiment, the motor is a synchronous motor with a power of 160KW and a rotation speed of 1800 rpm. The mixing section 22 is the part of the rotor 2 inside the cavity. The main shaft section 21 and the mixing section 22 can be a permanently-connected whole, or they can be two detachable parts connected using any known manner. In this embodiment, it is preferable that the two are a permanently-connected whole. The diameter of the mixing section 22 gradually decreases from left to right (that is, from the side next to the prepolymer feed inlet 3 to the side next to the polymer outlet 5). In the following text, unless otherwise specified, the side of the mixing section 22 next to the prepolymer feed inlet 3 is referred to as its bottom surface, and the side of the mixing section 22 close to the polymer outlet 5 is referred to as its top section; the prepolymer feed inlet 3 is opposite the bottom surface of the mixing section 22, and the prepolymer feed inlet 3 is offset from the central position of the first end surface. The lateral conical surface of the mixing section 22 is a continuous smoothly curving surface, and the gap between the bottom surface of the mixing section 22 and the first end surface 11 of the housing is 3 mm; such a gap ensures that the prepolymer solution forms a thin liquid film, ensuring that the amount of prepolymer is relatively small when the prepolymer meets the mixed amine solution, which is beneficial in causing thorough contact between the prepolymer and the mixed amine solution, thus preventing any issues of localized proportioning errors between the two; the mixing section 22 is sequentially provided with a first blade group 23, a second blade group 24 and a third blade group 25 from left to right. The first blade group 23 has 30 first blades 23', the second blade group 24 has 8 second blades 24', and the third blade group 25 has 8 third blades 25'. Wherein, the outer diameter of the first blade group is ϕ474 mm and these are distributed along the circumference at intervals of 12°. The blade width is 54 mm. The first blades 23' in the first blade group are embedded in the bottom section of the mixing section 22 of the rotor. The distance between the left edge of the first blade group 23 and the bottom surface of the mixing section 22 is 50 mm. The gap between the end of the first blades 23' of the first blade group 23 furthest from the axis of the rotor and the circumferential surface 13 of the housing is 2 mm. In this embodiment, it is preferable that there is a certain distance between the first blade group 23 and the bottom surface of the mixing section 22 to allow space for provision of the mixed amine feed inlet 4 on the circumferential surface 13 of the housing, while causing the prepolymer solution to meet the mixed amine solution in a liquid film state to undergo division by the first blade group 23. In another optional embodiment, the first blade group 23 can also be flush with the bottom surface of the mixing section 22; provision of the mixed amine feed inlet 4 on the first housing end surface 11 is also capable of causing more uniform mixing of the materials. However, this may cause gels to accumulate in the gap between the bottom surface of the mixing section 22 and the first housing end surface 11. Therefore, the preferable scheme of the present embodiment is: the second blade group 24 is composed of second blades 24' with a width of 54 mm evenly distributed along the circumference, its outer rotating diameter being ϕ400 mm. The second blades 24' are embedded in the middle part of the mixing section 22; the blades of the third blade group 25 have a width of 36 mm, and the outer rotating diameter is ϕ300 mm. The third blades 25' are embedded at the end of the mixing section 22. The power for the rotation of each blade group comes from the driving device 6 connected to the rotor 2 that is not shown in the figure. Since the viscosity of the liquid in the reactor cavity gradually increases from left to right, the inner diameter of the reactor cavity and the outer rotating diameter of each blade group gradually decrease from left to right, which to some extent reduces the rating of the motor required by the rotor 2. In an optional embodiment, the third blade group 25 aligns with the center line of the discharge port 5 thus assisting the polymer solution to flow out from the polymer outlet 5.

In a preferred embodiment, the blades in the first blade group 23 and the second blade group 24 form an angle of 15° with the axis of the rotor 2, and the blades in the third blade group 25 form an angle of 30° with the axis of the rotor 2. As the blades in each blade group form a certain angle with the axis, not only do they play a role in stirring, but they also drive the liquid in the cavity to some extent, causing the liquid to move forward.

In the inner cavity of the housing 1, a first stator group 14 is provided between the first blade group 23 and the second blade group 24, and a second stator group 15 is provided between the second blade group 24 and the third blade group 25. Whereby, the first stator group 14 has 12 plate-shaped stators 14', and the second stator group 15 has 4 plate-shaped stators 15'. Wherein, each stator plate forms an angle of 20° with the axis of the rotor 2, and the minimum gap between the rotating surfaces of each stator group and the adjacent blade group is 1 mm, and the minimum gap between each stator group and the mixing section 22 is 2 mm. The diameter of the cavity gradually decreases from left to right.

In order to avoid the effects on the reaction of temperature changes in the cavity, the housing 1 is also provided with a heat-insulating interlayer 16. Cold water, hot water, or hot oil, etc. with a flow rate of 20 L/min can be used in the heat-insulating interlayer 16 for heating and cooling to adapt to polymerization reactions with different polymer proportions. Correspondingly, a heat-insulating liquid inlet 17 and a heat-insulating liquid outlet 18 are provided on the housing 1.

In the present embodiment, there are two mixed amine feed inlets 4, located at a relatively high point on the circumferential surface 13 of the housing. The liquid flow from the mixed amine solution supply pump is divided into two pipes with equal diameter and length to ensure that the flow rate to each mixed amine feed inlet is equal. The central axis of each mixed amine feed inlet 4 on the circumferential surface 13 of the housing aligns with the left edge of the first blade group 23. The mixed amine feed inlet 14 is also provided with a self-cleaning device 41 as shown in Figure 4. The self-cleaning device 41 comprises a cleaning device housing 42, a mixed amine solution inlet pipe 43, a perforated pipe 44, and a cleaning rod 45. Whereby, the mixed amine solution inlet pipe 43 is connected to the reactor housing 1 via the cleaning device housing 42. The perforated pipe 44 is provided within the cleaning device housing 42, one end of the perforated pipe 44 communicating with the reactor housing 1, and there are multiple openings provided on the pipe body of the perforated pipe 44. The cleaning rod 45 extends from the outside of the cleaning device housing 42 into the perforated pipe 44, and a handle 46 is provided on the cleaning rod 45 external to the cleaning device housing 42. A scraping head can be provided on the cleaning rod 45 in the perforated pipe 44, or the diameter of the rod body may be such that it corresponds to the inner diameter of the perforated pipe 44. The handle 46 allows the cleaning rod 45 to be pushed into the reactor cavity, so as to scrape off the by-product gel attached to the inner wall of the perforated pipe 44, having the effect of cleaning the perforated pipe 44. The handle 46 can be manually operated, or connected to an automatic device to automatically push the cleaning rod 45 to clean the perforated pipe 44 regularly. By performing the cleaning operation regularly, the by-product gel can be scraped off when the accumulated amount is small, effectively ensuring the smooth flow of the mixed amine solution feed, while trace amounts of gel debris will not have a substantial impact on the polymer solution. The bore of each mixed amine feed inlet 4 is sufficient to deliver the required total flow of mixed amine solution into the reactor cavity. When one perforated tube 44 is being cleaned, the other perforated tube remains in normal operation. Cleaning activity takes place on each of the two feed inlets alternately, thus ensuring that the cleaning process does not cause mixed amine solution back-pressure disturbances or flow interruption.

The working process of the reactor of this embodiment is as follows:
When the reactor provided by the present invention is in operation, the inside of the reactor can be divided into three parts: area A, area B, and area C according to the flow direction of the liquid during operation. Whereby, area A is the feed and pre-mixing area of the reactor, and comprises the prepolymer feed inlet 3, the mixed amine feed inlet 4, the bottom surface of the mixing section 22, and the first blade group 23, etc.; area B is the mixing area of the reactor, and comprises the first stator group 14 and the second blade group 24, etc.; area C is the outlet area of the reactor, and comprises the second stator group 15 and the third blade group 25, etc. During operation of the reactor, the mixing intensity decreases sequentially from area A to area B to area C.

In area A, the prepolymer solution and the mixed amine solution meet and preliminary mixing is completed under the action of the first blade group. The specific process being as follows:
The motor within the driving device 6 drives the rotor 2 to rotate at a high speed via transmission devices such as a coupling and a bearing. The prepolymer solution, one of the reaction materials, is accurately metered by a metering pump that is not shown in the figure and enters the reactor cavity through the prepolymer feed inlet 3 on the first end surface 11 of the housing. Under the centrifugal force of the rotor 2 and the pushing action of the metering pump, the prepolymer solution is continuously pushed to the right along the smooth mixing section 22. Since the bottom section of the mixing section 22 occupies most of the volume of area A, the prepolymer solution forms a flowing liquid prepolymer film on the surface of the mixing section 22 of the rotor. At the same time, the mixed amine solution is injected onto the side edge of the bottom section of the mixing section 22 via the mixed amine inlet 4. In this area, the prepolymer and the mixed amine solution react extremely quickly. When the flowing liquid prepolymer film meets the jet flow of the mixed amine solution, it is cut and divided into a large number of small-volume units by the first blade group 23 rotating at a speed of 1800 rpm, which helps the precise proportioning of the prepolymer solution and the mixed amine solution. At the same time, under the driving force of the prepolymer metering pump and the mixed amine solution metering pump, the reactants are quickly dispersed and pushed forward by the tightly-spaced first blade group 23, avoiding the generation of by-product gels due to localized prepolymer solution and amine solution proportioning imbalances at the mixed amine feed inlet 4, further avoiding the influence of the by-product gels on the subsequent reaction.

An amine feed inlet 4 backflow phenomenon can occur from time to time, resulting in high-viscosity polymer liquid blockage at the mixed amine feed inlet 4. Therefore, a self-cleaning device 41 is provided on the mixed amine feed inlet 4. The mixed amine solution enters via the mixed amine inlet pipe 43, entering the reactor cavity via the perforated pipe 44. The operator or the automatic device regularly pulls and pushes the handle 46 to drive the cleaning rod 45 to move back and forth in the perforated pipe 44, scraping off the high-viscosity polymer adhered to the inner wall of the perforated pipe 44 and ensuring smooth flow at the mixed amine feed inlet 4. When one perforated pipe 44 is being cleaned, the other perforated pipe is in a normal working state, and cleaning operations are performed alternately on the two feed inlets, to ensure that cleaning operations do not cause mixed amine solution flow backpressure disturbances or flow interruptions. Preferably, cleaning operations are carried out at least 6 times an hour to prevent the by-product gel from accumulating in either of the mixed amine feed inlets.

After passing through the first blade group 23, the prepolymer solution and the mixed amine solution undergo preliminary mixing and reaction, however the reaction is not yet complete. The nascent polymer obtained from the reaction increases the viscosity of the mixed liquid in the reactor and it continues to flow to the right along the surface of the mixing section 22 and enters area B.

In area B, the blending of the nascent polymer is carried out, and the viscosity of the polymer continues to increase gradually in this area. The specific process being as follows:
When the nascent prepolymer formed in area A passes through the second blade group 24 on the mixing section 22, the second blade group 24 stirs the mixed liquid in the cavity again, so that unreacted NCO prepolymer groups are fully mixed and come into contact with and react with the mixed amine solution NH₂ groups. Since the diameter of the mixing section 22 at the second blade group 24 has reduced, the diameter of the cavity also reduces, and the stirring radius of the second blade group 24 is also reduced. Moreover, due to the small number of blades in the second blade group 24, the heat generated by the second blade group 24 stirring the viscous polymer also decreases. Therefore, the rotation speed of the rotor can be increased, making the mixing more uniform and improving the mixing efficiency. At the same time, since the diameter of the mixing section 22 in area B is larger than its diameter in area C, and the inner diameter of the cavity decreases, the linear velocity of the liquid flow in the cavity increases from left to right in area B, thus reducing the residence time of the finished polymer moving from area B to the polymer outlet 5 in area C.

In area C, the mixed liquid has more or less completed reaction after passing through the second blade group 24, and the polymer liquid is obtained. At this time, the viscosity of the polymer liquid obtained increases further, and the polymer liquid continues to flow to the right along the surface of the mixing section 22 and passes through the third blade group 25; at the same time that this causes a more thorough reaction, it also helps the polymer liquid to flow out of the reactor from the polymer outlet. Apart from this, the polymer reaction has already been completed in area C, the product viscosity reaching its maximum, and the resistance exerted on the third blade group 25 also reaching its maximum; in fact, the third blade group 25 also has the effect of increasing the rotational resistance of the rotor 2. The main shaft section 21 of the rotor 2 can be connected to a torque measuring device outside the reactor, and the results of measurement can be regarded as the extent of resistance exerted on the third blade group 25, the magnitude of the torque allowing measurement of the viscosity of the finished polymer solution. The outlet of the reactor is provided with a temperature sensor and a pressure sensor, and is connected to a polymer removal pump to maintain stable reactor outlet pressure. The temperature sensor allows real-time monitoring of reaction temperature changes and serves as a reference for evaluating degree of reaction and uniformity.

During the whole reaction process, in order to offset the tendency of the viscous polymer to follow and "climb" the rotating shaft of the rotor (i.e., the Weissenberg effect), in area B and area C, a first stator group 14 and a second stator group 15 are respectively provided on the inner wall of the cavity. The two groups of stators are adjacent to the side surface of the mixing section 22, and allow homogenization of the mixed solution, changing the flow direction and causing internal recirculation of the polymer substance, in this manner the mixing of the prepolymer and the mixed amine solution is more uniform and the reaction is more thorough; the relatively small gaps between each stator and the blade groups of the rotor 2 ensures the mixed liquid is fully extruded and divided by the stators and the rotor as it passes through the gap, making the mixing of the prepolymer and the mixed amine solution more uniform and the reaction more thorough. Each stator plate forms a certain angle with the axis of the rotor 2. This arrangement not only ensures more complexity in the flow direction of the liquid in the cavity, but also reduces the size of the stator while ensuring a sufficiently small minimum gap between the stator and the rotor blades, making the equipment lighter.

The actual effects of employing the reactor provided in this embodiment were as follows:
The prepolymer was dissolved in dimethylacetamide and continuously metered into the reactor at an hourly rate; the mixed amine required for the polymerization was also metered into the reactor at an hourly rate and dissolved in the dimethylacetamide. The trial operation lasted for two weeks, and the prepolymer injection port was cleaned six times per hour. The final polymer was tested regularly, and the mean of the results was as follows:
Intrinsic viscosity 1.0;
Primary amine end group 15.0%;
Solid content 35.0%;

The volume viscosity calculated according to melt flow index was 2450 poise.

At the end of the test, the reactor was disassembled and cleanliness inspection carried out, and at that time, there were no signs of hard-segment gel deposits at the mixed amine feed inlet or other locations in the reaction chamber.

In summary, with the reactor provided by this embodiment, the combination of housing 1, mixing section 22 and first blade group 23, results in the mixed liquid of the prepolymer and the mixed amine solution being cut and divided into a large number of small units, and greater accuracy in the proportioning of the mixed liquid in each unit, avoiding the problem of localized proportioning imbalances; by adopting an arrangement whereby the rotor 2 in the reactor cavity is conical, the rotation radius of the blades is reduced, and at the same time, the viscous polymer linear cutting velocity and cutting radius are reduced, thereby reducing the heat generated by mechanical stirring of the viscous polymer, enabling the rotation speed of the rotor to be increased and ensuring more uniform mixing; compared to a traditional reactor, due to the liquid flow in the reactor being required to pass through the gaps between various components in the form of a film, the equipment can be scaled-down, reducing its weight; at the same time, the smaller rotation radius of the blades reduces the resistance encountered stirring the viscous materials, enabling the rotation speed of the rotor to be increased to 1800 rpm, improving stirring efficiency and reaction efficiency.

## Claims

1. A continuous reactor for the spinning dope of dry-spun spandex which comprises a housing and a rotor, the housing being provided with a prepolymer feed inlet, a mixed amine feed inlet and a polymer outlet, wherein the housing comprises a circumferential surface and at least one end surface, the rotor comprises a main shaft section and a mixing section, the main shaft section passes through the housing and is connected to a driving device, the mixing section is the part of the rotor inside the reactor cavity, the diameter of the mixing section gradually decreases from the side next to the prepolymer feed inlet to the side next to the polymer outlet, and the gap between the bottom surface of the mixing section and the end surface of the housing is less than 5 mm, the mixing section is sequentially provided with at least a first blade group and a second blade group in the direction in which its diameter decreases.

2. The reactor according to claim 1, wherein the gap between the end of the first blade group furthest from the axis of the rotor and the circumferential surface of the housing is less than 5 mm.

3. The reactor according to claim 1, wherein the rotation radius of each blade group gradually decreases in the direction of the discharge port.

4. The reactor according to claim 1, wherein the prepolymer feed inlet is opposite the bottom surface of the mixing section.

5. The reactor according to claim 1, wherein the relationship between the relative positions of the mixed amine feed inlet and the first blade group satisfies one of the following arrangements:
1) The mixed amine feed inlet is opposite the first blade group;
2) The mixed amine feed inlet is located between the prepolymer feed inlet and the first blade group;
3) The side of the first blade group next to the prepolymer feed inlet partially overlaps the mixed amine feed inlet when projected radially onto the reactor.

6. The reactor according to claim 1, wherein the diameter of the cavity gradually decreases from the prepolymer inlet in the direction of the polymer outlet.

7. The reactor according to claim 1, wherein there is a stator group provided in the reactor cavity, a stator group being provided between each blade group

8. The reactor according to claim 7, wherein the minimum gap between the stator and the mixing section is less than 5 mm, and the minimum gap between the stator and the adjacent blades is less than 5 mm.

9. The reactor according to claim 1, wherein the mixed amine feed inlet is provided with a self-cleaning device, which comprises a cleaning device housing, a liquid inlet pipe, a perforated pipe and a cleaning rod, whereby the perforated pipe is provided with multiple openings. The cleaning rod extends from the outside of the cleaning device housing into the perforated pipe, and a handle is provided on the cleaning rod outside the cleaning device housing.

10. A polyurethane chain-extension reaction method using the reactor described according to any one of claims 1-9, wherein this comprises the following steps:
1) The prepolymer enters the reactor cavity through the prepolymer feed inlet, and a liquid film with a thickness of less than 5 mm is formed due to the effect of the housing and the bottom surface of the mixing section;
2) During the process of the liquid film advancing, the mixed amine solution is ejected from the mixed amine feed inlet and meets the liquid film;
3) At the same time as the liquid film meets the mixed amine solution, the first blade group divides the mixture of the prepolymer and the mixed amine solution into multiple small units, an initial reaction taking place simultaneously within the small units;
4) The prepolymer and the mixed amine solution continue to advance due to the pushing of the metering pump and the blades. As the advancing process takes place, thorough stirring by the blades occurs at all stages, and the chain-extension reaction and chain-termination reaction take place to obtain the polymer, whereby the rotation speed of the blades is 300-3000 rpm;
5) The polymer exits the reactor after undergoing reaction by being pushed through the polymer outlet by the metering pump and the blades.
